(19) Europäisches Patentamt
European Patent Office
Office européen des brevets

(11) Veröffentlichungsnummer: **0 026 882**
**A1**

(12) # EUROPÄISCHE PATENTANMELDUNG

(21) Anmeldenummer: **80105836.3**

(22) Anmeldetag: **26.09.80**

(51) Int. Cl.³: **C 07 F 9/535**, C 07 F 9/65

(30) Priorität: **05.10.79 DE 2940389**

(43) Veröffentlichungstag der Anmeldung: **15.04.81 Patentblatt 81/15**

(84) Benannte Vertragsstaaten: **DE FR GB IT**

(71) Anmelder: **HOECHST AKTIENGESELLSCHAFT, Zentrale Patentabteilung Postfach 80 03 20, D-6230 Frankfurt/Main 80 (DE)**

(72) Erfinder: **Rieck, Hans-Peter, Dr., Freiherr-vom-Stein-Strasse 37, D-6233 Kelkheim (Taunus) (DE)**

(54) **Verfahren zur Herstellung von Alkyl-chlor-phosphazenen.**

(57) Alkylchlorphosphazene werden aus Alkyltetrachlorphosphoranen und mindestens der äquimolaren Menge an Ammoniumchlorid in einem inerten organischen Lösungsmittel bei erhöhter Temperatur hergestellt.

Erfindungsgemäß gibt man das Alkyltetrachlorphosphoran langsam in dem Maße zu der reagierenden Suspension wie es verbraucht wird oder erzeugt es kontrolliert in der Lösung. Das anfallende Produkt ist besonders reich an cyclischen Alkylchlorphosphazenen.

EP 0 026 882 A1

ACTORUM AG

HOECHST AKTIENGESELLSCHAFT HOE 79/F 265    Dr. SP/Fr

Verfahren zur Herstellung von Alkyl-chlor-phosphazenen

Die Erfindung betrifft ein verbessertes Verfahren zur Herstellung von Alkyl-chlor-phosphazenen aus Alkyltetrachlorphosphoranen und Ammoniumchlorid.

Methyl-chlor-phosphazene der Formeln $(NPClCH_3)_3$ und $(NPClCH_3)_4$ sind bereits bekannt. Das Trimere kann aus 2,4,6-Trichlor-2,4,6-tris(dimethylamino)cyclotriphosphazen in einer Grignard-Reaktion mit Methylmagnesiumjodid und anschließender Spaltung der Phosphor-Dimethylamino-Bindung durch wasserfreien Chlorwasserstoff gewonnen werden (G. Tesi und P.J. Slota Jun., Proc. Chem. Soc., 1960, 404).

Nach einem anderen Verfahren kann ein Gemisch von Trimerem und Tetramerem aus Methyltetrachlorphosphoran erhalten werden, das mit einer Suspension von Ammoniumchlorid in Chlorbenzol 8 Stunden lang bei 100 - 130°C umgesetzt wird (V.N. Prons, M.P. Grinblat und A.L. Klebanskii, Zh. Obshch. Khim., 41, 482 (1971)). Nach dieser Literaturstelle werden nur geringe Mengen an Methyl-chlor-phosphazenen erhalten, wenn man von handelsüblichem Ammoniumchlorid ausgeht. Wenn man jedoch das Ammoniumchlorid direkt aus Ammoniak und Chlorwasserstoff herstellt, steigt die Ausbeute an Methyl-chlor-phosphazenen auf 58 % an. Bei der Isolierung durch Vakuumsublimation und Umkristallisation wird dabei ein Produktgemeisch von $(NPClCH_3)_3$ und $(NPClCH_3)_4$ im Verhältnis 3:2 erhalten.

Es ist ein Nachteil dieses Verfahrens, daß Ammoniumchlorid in situ hergestellt werden muß und dennoch die Ausbeuten noch gering sind.

Es bestand daher die Aufgabe, ein Verfahren für die Herstellung von Alkyl-chlor-phosphazenen zu finden, das auch bei Verwendung von handelsüblichem Ammoniumchlorid hohe

Ausbeuten liefert und das auch auf andere Alkyl-chlor-phosphazene anwendbar ist als Methyl-chlor-phosphazen.

Das erfindungsgemäße Verfahren löst diese Aufgabe.

Es wurde nun ein Verfahren zur Herstellung von Alkyl-chlor-phosphazenen gefunden, bei dem man ein Alkyltetrachlorphosphoran, dessen Alkylgruppe 1 bis 6 C-Atome enthält, mit mindestens der äquimolaren Menge an Ammoniumchlorid in einem inerten organischen Lösungsmittel bei erhöhter Temperatur umsetzt, und das dadurch gekennzeichnet ist, daß man das Alkyltetrachlorphosphoran langsam nach Maßgabe seines Verbrauches zur Suspension von Ammoniumchlorid im Lösungsmittel zugibt oder in dieser in situ erzeugt.

Mit der langsamen Zugabe des Alkyltetrachlorphosphorans soll sichergestellt werden, daß zu jedem Zeitpunkt nur eine geringe Konzentration sowohl an dieser Ausgangsverbindung wie auch an reaktiven Zwischenstufen in der Reaktionsmischung vorhanden ist.

Die eingesetzten inerten Lösungsmittel dürfen keinen reaktiven Wasserstoff enthalten. Ihre Siedepunkte sollen unter dem gewählten Arbeitsdruck mindestens 60°C betragen. Bevorzugt werden Kohlenwasserstoffe und Halogenkohlenwasserstoffe, insbesondere Chlorkohlenwasserstoffe wie 1,1,2,2-Tetrachloräthan. Mit Vorteil werden eingesetzt Chloraromaten, insbesondere Chlorbenzol-Derivate wie Dichlorbenzol, Trichlorbenzol, insbesondere aber Monochlorbenzol.

Die langsame Zugabe des Alkyltetrachlorphosphorans geschieht vorteilhafterweise so, daß zu jedem Zeitpunkt die insgesamt zugegebene molare Menge höchsten so groß ist wie (0,25 HCl + b), wobei HCl die seit Reaktionsbeginn entwickelte molare Menge an Chlorwasserstoff und b die halbe

molare Menge der insgesamt zuzugebenden Menge an Alkyltetrachlorphosphoran ist.

Die im Reaktionsgefäß unverbraucht vorhandene Menge an Alkyltetrachlorphosphoran läßt sich bestimmen, wenn während der Reaktion der gebildete Chlorwasserstoff in Wasser aufgefangen und gegen Natronlauge titriert wird. Aus der Differenz der entstandenen Menge an HCl und der Menge an HCl die (bei vollständiger Umsetzung) aus dem zugegebenen oder in situ entstandenen Alkyltetrachlorphosphoran hätte gebildet werden müssen, läßt sich die noch unverbrauchte Menge an Phosphoran errechnen.

*oder Suspension

Die allmähliche Zugabe des Alkyltetrachlorphsophorans kann durch direkte Zugabe der reinen Verbindung, durch Zutropfen einer kalten oder erwärmten Lösung* oder durch Extraktion der Verbindung aus einer Vorlage mit Hilfe eines Lösungsmittels, z.B. mit Hilfe einer Soxhlett-Apparatur, erfolgen.

Anstatt das Alkyltetrachlorphosphoran zuzugeben, kann man auch diese Verbindung aus Alkyldichlorphosphan und Chlor in situ erzeugen. Dabei kann das Alkyldichlorphosphan ganz oder teilweise vorgelegt werden. Bei dieser Variante läßt sich die Herstellung des Alkyltetrachlorphosphorans besonders gleichmäßig gestalten. Das Auftreten von freiem Chlor in den Abgasen zeigt an, daß das Ausgangsprodukt völlig verbraucht ist.

Vorzugsweise wird bei dieser Variante die Zugabe von Chlor so bemessen, daß zu jedem Zeitpunkt die insgesamt zugegebene molare Menge an Chlor höchstens so groß ist, wie (0,25 HCl + b), wobei HCl die seit Einleiten des Chlors entwickelte molare Menge an Chlorwasserstoff und b 50 % der vorgelegten molaren Menge an Alkyldichlorphosphan bedeutet. Durch diese bevorzugte Rückkopplung zwischen HCl-Entwicklung und Zugabe von Alkyltetrachlorphosphoran (bzw.

dessen Erzeugung aus vorgelegten Alkyldichlorphosphan und eingeleitetem Chlor) wird erreicht, daß zu keinem Zeitpunkt eine zu große Menge an Alkyltetrachlorphosphoran in der Reaktionsmischung vorhanden ist.

Es ist besonders bevorzugt wenn b nur 25 %, noch besser nur 15 % der insgesamt einzusetzenden molaren Menge an Phosphorverbindung ist. Dies führt zwar zu einer Verringerung der erlaubten Zugabegeschwindigkeit für das Alkyltetrachlorphosphoran (bzw. Chlor) aber auch zu einer Erhöhung der Ausbeute an Phosphazen.

Bevorzugte Temperaturen für das erfindungsgemäße Verfahren liegen bei 60 bis 150°C, insbesondere bei 100 bis 135°C. Pro Liter organisches Lösungsmittel werden vorzugsweise 0,1 bis 6 Mol, insbesondere 0,3 bis 3 Mol Alkyltetrachlorphosphoran (bzw. Alkyldichlorphosphan) eingesetzt. Noch niedrigere Konzentrationen an Phosphorverbindung erhöhen die Ausbeute, führen jedoch zu einer umständlichen Aufarbeitung großer Mengen von Lösungsmittel. Sofern vor allem polymere Alkylchlorphosphazene gewünscht sind, so wird die Reaktion bei erhöhter Konzentration an Alkyltetrachlorphosphoran durchgeführt.

Nach beendeter Zugabe des Phosphorans (bzw. nach beendetem Einleiten von Chlor) wird die Reaktionslösung noch einige Zeit weiter erhitzt, bis die Entwicklung von Chlorwasserstoffgas nahezu beendet ist.

Das beschriebene Verfahren läßt sich durch die folgenden Reaktionsgleichungen darstellen:

$$RPCl_2 + Cl_2 \longrightarrow RPCl_4$$

$$RPCl_4 + NH_4Cl \longrightarrow \frac{1}{x}\,(NPClR)_x + 4HCl$$ (R = Alkyl; $x \geq 3$)

Für das erfindungsgemäße Verfahren kann handelsübliches körniges Ammoniumchlorid verwendet werden; bevorzugt ist jedoch der Einsatz von feinteiligem Ammoniumchlorid, das beispielsweise durch mechanisches Vermahlen von handelsüblichem Ammoniumchlorid gewonnen wurde. Besonders bevorzugt ist es, im Reaktionsgefäß das Ammoniumchlorid in feinverteilter Form in situ herzustellen, indem gasförmiger Chlorwasserstoff und gasförmiges Ammoniak in das für die Umsetzung gewählte organische Lösungsmittel eingeleitet werden. Für die Umsetzung ist eine (bezogen auf Alkyltetrachlorphosphoran) äquimolare Menge an Ammoniumchlorid ausreichend; bevorzugt wird zur raschen quantitativen Reaktion jedoch ein Überschuß an Ammoniumchlorid, insbesondere ein Überschuß von 10 bis 200% d.Th.

Die Umsetzung von Ammoniumchlorid mit Alkyltetrachlorphosphoran kann in Gegenwart geringer Mengen an Metallsalzen durchgeführt werden, die mit Ammoniak Koordinationsverbindungen bilden. Geeignet sind z.B. wasserfreies Magnesiumchlorid oder Chloride, die bei der Darstellung von Phosphornitrilchlorid hilfreich sind (DE-PS 10 85 508, US-PS 3 462 247, US-PS 3 407 047). Die Zugabe dieser Metallsalze führt zu einer Erhöhung der Reaktionsgeschwindigkeit; eine wesentliche Veränderung der Ausbeute oder der Produktzusammensetzung erfolgt nicht. Jedoch kann die Zugabe geringer Mengen an wasserfreien Metallsalzen die Braunfärbung der Reaktionsmischung verhindern, die bei der Darstellung von Cyclophosphazenen häufig zu beobachten ist.

Nach beendeter Reaktion wird überschüssiges Ammoniumchlorid aus der Reaktionslösung abgetrennt (beispielsweise durch Filtrieren) und das Filtrat aufgearbeitet. Hierzu wird man im allgemeinen das Lösungsmittel, vorzugsweise im Vakuum, abdestillieren. Die weitere Aufarbeitung hängt vom beabsichtigten Einsatzzweck des Alkyl-chlor-phosphazens ab. Durch Sublimation oder Destillation des Rückstandes,

vorzugsweise im Vakuum, lassen sich die cyclischen Oligomeren des Alkyl-chlor-phosphazens von den linearen Polymeren abtrennen. Dabei fallen in der Hauptsache Produkte mit einem hohen Anteil an dem cyclischen Trimeren an. Das gleiche gilt für die Reinigung durch Umkristallisation. Hierfür eignen sich z.B. gesättigte Kohlenwasserstoffe, wie Hexan oder Heptan, Methylenchlorid, Chloroform, Tetrachlormethan, Acetonitril, Essigsäureäthylester, Toluol oder Tetrahydrofuran. Vorzugsweise wird der Rückstand in einem polaren Lösungsmittel aufgelöst und durch Zugabe eines unpolaren Lösungsmittels wieder ausgefällt oder direkt aus einem unpolaren Lösungsmittel umkristallisiert. Beim Umkristallisieren wird im allgemeinen ein Isomerengemisch der cis- und der trans-Verbindung des cyclischen Trimeren erhalten.

Nach dem erfindungsgemäßen Verfahren lassen sich beispielsweise Alkyl-chlor-phosphazene erhalten, die eine Methyl-, Äthyl-, Isopropyl-, Cyclopropyl-, Butyl-, t.-Butyl-, Cyclopentyl-, n-Pentyl-, n-Hexyl-, und Cylcohexyl-Gruppe als Alkylgruppe enthalten.

Bei Einsatz von Methyltetrachlorphosphoran lassen sich Ausbeuten an Methyl-chlor-phosphazenen bis zu 98 % erzielen. Im Rohprodukt liegt in der Hauptsache das Trimere vor. Daneben lassen sich noch cyclische Phosphazene mit bis zu 8 Phosphornitril-Einheiten, sowie lineare Polymere nachweisen.

Die nach dem erfindungsgemäßen Verfahren hergestellten Alkyl-chlor-phosphazene lassen sich zum Flammschutz von Textilien einsetzen. Sie sind ferner wertvolle Zusatzstoffe bei der Herstellung von flammhemmenden Massen und Schaumstoffen. Sie gleichen hierin den bereits bekannten substituierten Cyclophosphazenen (DE-OS 28 33 910, US-PS 4 107 108, US-PS 4 124 557). Dies gilt sowohl für das Rohprodukt, insbesondere aber für die gereinigten cyclischen Oligomeren.

Die langsame Zugabe von Chlor-Phosphor-Verbindungen zu Ammoniumchlorid-Suspensionen hat sich auch bereits früher in anderen Fällen als vorteilhaft für die Erhöhung der Ausbeute und des Anteils an cyclischen Oligomeren erwiesen. Diese gilt für eine langsame Zugabe von Phosphorpentachlorid bei der Herstellung von Phosphornitrilchlorid (DE-AS 10 85 508, US-PS 3 667 992) und für die langsame Zugabe von Tetrachlorphenylphosphoran bei der Herstellung von cyclischen Phenyl-chlor-phosphazenen (GB-PS 992 377, 1 023 415, US-PS 3 234 273, DE-AS 12 30 421). Es konnte jedoch nicht vorausgesehen werden, daß dieses Prinzip auch bei der Herstellung von Alkyl-chlor-phosphazenen erfolgreich sein würde.

Beispiel 1

In einem 2 L-Dreihalskolben, der mit Rückflußkühler, Gaseinleitungsrohr und Innenthermometer versehen ist, werden 1 l Chlorbenzol, 107 g (2 Mol) handelsübliches Ammoniumchlorid, 188 g (1,61 Mol) Methyldichlorphosphan und 2,0 g wasserfreies Magnesiumchlorid vorgelegt. Die Reaktionsmischung wird unter starkem Rühren auf 115°C erhitzt. Anschließend wird Chlorgas mit einer Geschwindigkeit von 0,75 g/Min. eingeleitet. Die Reaktionsmischung wird unter Rückfluß erhitzt, wobei die Temperatur allmählich auf 125°C ansteigt. Die Einleitung des Chlorgases wird unterbrochen, sobald im Abgasstrom $Cl_2$ nachgewiesen werden kann, was nach etwa 150 Min. der Fall ist. Zur Vervollständigung der Reaktion wird die Reaktionsmischung weitere 90 Min. unter Rückfluß erhitzt, wobei die Temperatur schließlich 132°C erreicht und die HCl-Entwicklung beendet ist. Das überschüssige Ammoniumchlorid wird im Vakuum abfiltriert und 2x mit je 100 ml Chlorbenzol gewaschen. Vom Filtrat wird das Chlorbenzol im Vakuum abdestilliert, wobei nach Trocknung im Ölpumpenvakuum 135 g eines dunkelbraunen Gemisches oligomerer und polymerer Methylchlorphosphazene, entsprechend einer Rohausbeute von 88 % erhalten wird.

77 g des Methylchlorphosphazen-Gemisches werden mit 100 ml siedenden Heptans extrahiert, wobei 53,9 g gelöst werden. Aus dem Extrakt können durch zweifache Umkristallisation mit Heptan 12,2 g (22 % der Theorie bezogen auf Methyldichlorphosphan) eines cis-/trans-Isomerengemisches von $(NPClCH_3)_3$ gewonnen werden. Fp. 143 - 148°C. IR-Bande bei 1190 $cm^{-1}$.

Nach einer weiteren Umkristallisation aus Heptan erhält man das reine cis-Trimere vom Fp. 157 - 158°C ($^{31}$P-NMR in $CDCl_3$: 39 ppm).

Bei der Sublimation von 52,4 g des Methylchlorphosphazen-Gemisches werden in 10 h bei 120°C/$_{0.1}$ als Sublimat 19,9 g (33 % d.Th.) cis-/trans-$(NPClCH_3)_3$ erhalten.
$^{31}$P-NMR ($CDCl_3$): cis-$(NPClCH_3)_3$ = 39,9 ppm; trans-$(NPClCH_3)_3$ = 42,4 ppm (1 Phosphor), 41,2 ppm (2 Phosphor).

Beispiel 2

In einem 2 l-Vierhalskolben, der mit Rückflußkühler, zwei Gaseinleitungsrohren und einem Innenthermometer versehen ist, wird 1 l Chlorbenzol vorgelegt. 2 Mol Ammoniumchlorid werden in situ hergestellt, indem unter Kühlung und unter gutem Rühren innerhalb 1 Stunde 34 g Ammoniak und 73 g Chlorwasserstoff in das Chlorbenzol eingeleitet werden. Dem Reaktionsansatz werden 188 g (1,61 Mol) Methyldichlorphosphan zugesetzt. Die weitere Reaktionsführung erfolgt wie in Beispiel 1. Rohausbeute 150 g (98 %), braunes kristallines Produkt. Die $^{31}$P-NMR-Analyse zeigt einen Gehalt von 75 % an $(NPClCH_3)_3$ an, das je zu etwa der Hälfte aus der cis- und der trans-Verbindung besteht. Höhere Digomere von Methylchlorphosphazenen bilden den restlichen Anteil von 25 %.

Beispiel 3

Beispiel 2 wird wiederholt, jedoch werden bei der Zugabe von Methyldichlorphosphan noch 2,0 g wasserfreies Magnesiumchlorid der Reaktionsmischung zugesetzt. Die Reaktion ergibt 135 g weißes kristallines Produkt (88 % Ausbeute) mit einem Anteil von 77 % an $(NPClCH_3)_3$.

Beispiel 4

Nach dem in Beispiel 2 angegebenen Verfahren werden in 1 l Chlorbenzol 4 Mol Ammoniumchlorid hergestellt. Zu dieser Mischung werden 376 g (3,22 Mol) Methyldichlorphosphan und

4 g wasserfreies Magnesiumchlorid zugesetzt. Unter Rückflußbedingungen (105 - 130°C) wird ein Chlorstrom von 1,5 g/Min. eingeleitet, bis im Abgas Chlor nachgewiesen werden kann. Nach anschließendem 60 minütigem Rühren unter Rückfluß wird nach dem Erkalten der Lösung das überschüssige Ammoniumchlorid abfiltriert, vom Filtrat das Lösungsmittel abdestilliert und das Rohprodukt getrocknet. Rohausbeute: 260,4 g (85 %), Anteil an cis-$(NPClCH_3)_3$ 36 %, Anteil an trans-$(NPClCH_3)_3$ 19 %.

Beispiel 5

Wie in Beispiel 2 beschrieben, wird in 1 l Chlorbenzol 1 Mol Ammoniumchlorid hergestellt. Zu dieser Mischung werden 44,4 g (306 Mol) Isopropyldichlorphosphan und 0,4 g wasserfreies Magnesiumchlorid zugesetzt. Bei 120°C wird ein Chlorstrom von 0,15 g/Min. eingeleitet, bis im Abgas Chlor nachgewiesen werden kann. Die Reaktionsmischung wird anschließend 1 Stunde bei 130°C gerührt; nach dem Erkalten der Lösung wird das überschüssige Ammoniumchlorid abfiltriert, vom Filtrat das Lösungsmittel abdestilliert und das Rohprodukt bei 0,1 Torr getrocknet. Man erhält als Rohprodukt 37,0 g einer Mischung von Isopropylchlorphosphazenen. IR-Bande bei 1170-1280 $cm^{-1}$.

Beispiel 6

Wie in Beispiel 2 beschrieben, wird in 1 l Chlorbenzol 1 Mol Ammoniumchlorid hergestellt. Dazu wird 1 g wasserfreies Magnesiumchlorid gegeben. Die Reaktionsmischung wird unter kräftigem Rühren auf 110°C erhitzt und bei dieser Temperatur innerhalb 1,75 Stunden in zehn Portionen mit insgesamt 147,7 g (0,786 Mol) Methyltetrachlorphosphoran versetzt. Nach beendeter Zugabe wird 1,5 Stunden bei 130°C gerührt, nach dem Erkalten das überschüssige Ammoniumchlorid abfiltriert und der Rückstand zweimal mit

Chlorbenzol gewaschen. Vom Filtrat wird das Lösungsmittel im Vakuum abdestilliert und das Rohprodukt getrocknet. Rohausbeute 64,5 g (87 %), nach $^{31}P$-NMR cis-$(NPClCH_3)_3$ 35 %, trans-$(NPClCH_3)_3$ 10 %, $(NPClCH_3)_4$ 20 %, $(NPClCH_3)_5$ 15 %, übrige Methylchlorphosphazene 20 %.

Beispiel 7

Wie in Beispiel 2 beschrieben, wird in 1 l Chlorbenzol 1 Mol Ammoniumchlorid hergestellt. Zu dieser Mischung werden 58,45 g (0,50 Mol) Methyldichlorphosphan und 0,7 g Magnesiumchlorid zugesetzt. Unter Rückflußbedingungen (120 - 132°C) wird 120 Min. lang ein Chlorstrom von 0,30 g/Min. eingeleitet und anschließend die Reaktionsmischung 60 Min. unter Rückfluß gerührt und, wie in Beispiel 4 beschrieben, aufgearbeitet. Rohausbeute 46,3 g (97 %).

Während der Reaktion wird der entstehende Chlorwasserstoff in Wasser absorbiert und gegen Natronlauge titriert. Die Ergebnisse der Titration sind in Tabelle 1 aufgeführt. Die im Reaktionsgefäß unverbraucht vorhandene Menge an Methyltetrachlorphosphoran beträgt - wie eine Rechnung ergibt - maximal 12 % der insgesamt erzeugten molaren Menge an Methyltetrachlorphosphoran.

Tabelle 1

| t (Min.) | Mol $Cl_2$ eingeleitet | $\frac{\text{Mol HCl}}{4}$ entwickelt | Mol $CH_3PCl_4$ im Reaktionsgefäß errechnet | $\frac{\text{Mol } CH_3PCl_4 \text{ im Reaktionsgef.}}{\text{Mol } CH_3PCl_4 \text{ gesamt}}$ |
|---|---|---|---|---|
| 0 | 0 | 0 | 0 | 0 % |
| 13 | 0,05 | 0,02 | 0,03 | 6 % |
| 23 | 0,10 | 0,05 | 0,05 | 10 % |
| 39 | 0,16 | 0,10 | 0,06 | 12 % |
| 50 | 0,21 | 0,15 | 0,06 | 12 % |
| 60 | 0,25 | 0,20 | 0,05 | 10 % |
| 72 | 0,30 | 0,25 | 0,05 | 10 % |
| 83 | 0,35 | 0,30 | 0,05 | 10 % |
| 97 | 0,40 | 0,35 | 0,05 | 10 % |
| 109 | 0,45 | 0,40 | 0,05 | 10 % |
| 134 | 0,50 | 0,45 | 0,05 | 10 % |
| 155 | 0,50 | 0,475 | 0,025 | 5 % |

Patentansprüche:

1. Verfahren zur Herstellung von Alkyl-chlor-phosphazenen aus einem Alkyltetrachlorphosphoran, dessen Alkylgruppe 1 - 6 C-Atome enthält, und mindestens der äquimolaren Menge an Ammoniumchlorid in einem inerten organischen Lösungsmittel bei erhöhter Temperatur, dadurch gekennzeichnet, daß man das Alkyltetrachlorphosphoran langsam nach Maßgabe seines Verbrauches zur Suspension von Ammoniumchlorid im Lösungsmittel zugibt oder in dieser in situ erzeugt.

2. Verfahren nach Anspruch 1, dadurch gekennzeichnet, daß die Zugabe von Alkyltetrachlorphosphoran so bemessen wird, daß zu jedem Zeitpunkt die insgesamt zugegebene molare Menge an Alkyltetrachlorphosphoran höchstens so groß ist wie (0,25 HCl + b), wobei HCl die seit Reaktionsbeginn entwickelte molare Menge an Chlorwasserstoff und b 50 % der insgesamt zuzugebenden molaren Menge an Alkyltetrachlorphosphoran ist.

3. Verfahren nach Anspruch 1, dadurch gekennzeichnet, daß man in der Suspension von Ammoniumchlorid und Lösungsmittel ein Alkyldichlorphosphan vorlegt und man aus diesem durch langsames Einleiten von Chlor in situ Alkyltetrachlorphosphoran erzeugt.

4. Verfahren nach Anspruch 3, dadurch gekennzeichnet, daß die Zugabe von Chlor so bemessen wird, daß zu jedem Zeitpunkt die insgesamt zugegebene molare Menge an Chlor höchstens so groß ist, wie (0,25 HCl + b), wobei HCl die seit Reaktionsbeginn entwickelte molare Menge an Chlorwasserstoff und b 50 % der insgesamt zuzugebenden molaren Menge an Alkyldichlorphosphan bedeutet.

5. Verfahren nach einem der Ansprüche 1 bis 4, dadurch gekennzeichnet, daß man das Ammoniumchlorid vor Beginn der

Reaktion aus Ammoniak und Chlorwasserstoff in Gegenwart des inerten organischen Lösungsmittels erzeugt.

6. Verfahren nach Anspruch 1, dadurch gekennzeichnet, daß die Reaktionstemperatur 60 bis 150°C beträgt.

7. Verfahren nach Anspruch 1, dadurch gekennzeichnet, daß man die Reaktion in Gegenwart geringer Mengen an Metallsalzen durchführt, die mit Ammoniak Koordinationsverbindungen bilden.

8. Verfahren nach Anspruch 1, dadurch gekennzeichnet, daß man 0,1 bis 6 Mol Alkyltetrachlorphosphoran pro Liter organisches Lösungsmittel einsetzt.

9. Verfahren nach Anspruch 1, dadurch gekennzeichnet, daß man nach beendeter Reaktion das nicht umgesetzte Ammoniumchlorid entfernt, man das Lösungsmittel abzieht und anschließend den Rückstand im Vakuum destilliert oder subblimiert.

10. Verfahren nach Anspruch 1, dadurch gekennzeichnet, daß man nach beendeter Reaktion das nicht umgesetzte Ammoniumchlorid und das inerte Lösungsmittel entfernt, man den Rückstand in einem polaren Lösungsmittel auflöst und durch Zugabe eines unpolaren Lösungsmittels wieder ausfällt.

11. Verfahren nach Anspruch 1, dadurch gekennzeichnet, daß man nach beendeter Reaktion das nicht umgesetzte Ammoniumchlorid und das inerte Lösungsmittel entfernt und man den Rückstand aus einem unpolaren Lösungsmittel umkristallisiert.

0026882

Europäisches Patentamt

**EUROPÄISCHER RECHERCHENBERICHT**

Nummer der Anmeldung
EP 80 10 5836

| Kategorie | EINSCHLÄGIGE DOKUMENTE<br>Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| D | GB - A - 992 377 (W.R. GRACE)<br>* Insgesamt *<br>-- | 1-11 | C 07 F 9/535<br>9/65 |
| D | GB - A - 1 023 415 (W.R. GRACE)<br>* Insgesamt *<br>-- | 1-11 | |
| D | DE - B - 1 230 421 (W.R. GRACE)<br>* Insgesamt *<br>-- | 1-11 | RECHERCHIERTE SACHGEBIETE (Int. Cl.³) |
| | GB - A - 1 031 170 (W.R. GRACE)<br>* Insgesamt *<br>-- | 1-11 | C 07 F 9/28<br>9/535<br>9/65 |
| | H.R. ALLCOCK: "Phosphorus-Nitrogen Compounds", Cyclic, Linear, and High Polymeric Systems, Academic Press<br>New York, U.S.A.<br>Seiten 120-125 *<br>-- | 1-11 | |
| D | CHEMICAL ABSTRACTS, Band 75, Nr. 4, 26. Juli 1971, Seite 74, Nr. 22102k<br>Columbus, Ohio, U.S.A.<br>V.N. PRONS et al.: "Synthesis and polymerization of methylchloro-cyclophosphazenes"<br>& ZH. OBSHCH. KHIM. 1971, 41(2) 482-3<br>* Zusammenfassung *<br>---- | 1-11 | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| b | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Den Haag | 15-01-1981 | BESLIER |

EPA form 1503.1 06.78